# EUROPEAN PATENT APPLICATION

(11) **EP 1 734 097 A1**
(43) Date of publication of application: **20.12.2006**
(21) Application number: 04726741.4
(22) Date of filing: 09.04.2004
(51) Int. Cl.: C10B 49/02, C10B 53/00, C10B 53/02, F27B 7/14, F23G 5/20, F23G 5/44

(54) **CONTINUOUS CARBONIZING TREATMENT METHOD BY INTERNAL HEATING SELF-COMBUSTING SYSTEM**

(71) Applicant: MAEKAWA SEISAKUJO CO., LTD., Yokosuka-shi, Kanagawa 237-0061 (JP); Maekawa, Satoshi, Yokosuka-shi, Kanagawa 237-0064 (JP)
(72) Inventor: MAEKAWA, Satoshi, Yokosuka-shi, Kanagawa 237-0064 (JP)
(74) Representative: Zinnecker, Armin
(86) International application number: PCT/JP2004/005122
(87) International publication number: WO 2005/100510

(57) **Abstract**

The present invention provides a processing method which can process biomass resources to a carbide having a uniformity and including a large amount of high-carbon charcoal, can hold down an initial cost while capable of executing a large amount of process (for example, 100 ton per day), has a low running cost while can suppress a fuel consumption to a significantly low level, and can continuously carbonize a object having a high water content, having an unstable shape and having a high viscosity such as a sewage sludge even being a simple structure. The carbonization processing method has the steps of (i) continuously supplying a processing object M which is not preliminarily treated, or a processing object M which is formed at a predetermined magnitude by a preliminary treatment such as a fragmentation, a water content reduction or the like, from an upstream side of a cylindrical rotary kiln in which a spiral carrier wall is provided in an inner peripheral surface in an entire length and an agitating wall cutting across the carrier wall is formed in the carrier wall in a middle portion from the upstream side at a predetermined unit amount while rotating the rotary kiln, (ii) blowing a flame in an inner portion of the rotary kiln from a downstream side in a carrying direction of the rotary kiln in the state (i), and stopping the blowing of the flame if the processing object M is ignited within the rotary kiln, (iii) supplying an air necessary for burning a combustible gas generated from the processing object M to an inner portion of the rotary kiln from a downstream side, and self burning the combustible gas without supplying any fuel, (iv) sucking a gas generated in the inner portion of the rotary kiln from the upstream side of the rotary kiln so as to detoxify and discharge, and (v) discharging the carbide of the processing object M from an outlet in the downstream side of the rotary kiln so as to cool by executing the operations in the (i) to (iv).

## Description

### Technical Field

The present invention relates to a method of carbonizing a waste material called as biomass resources and the other combustible waste materials in an extremely energy saving manner and continuously on a large scale by utilizing a rotary kiln.

In this case, the biomass resources include carbohydrate resources, starch resources, forest resources, forest product resources, agricultural product resources, livestock product resources, living aquatic resources, industrial resources, and life resources (a food waste material and a sewage sludge).

### Background of the Invention

The continuous carbonizing process includes an external heat type dry distillation continuous carbonizing system and an internal heat type direct combustion continuous carbonizing system.

The external heat type dry distillation continuous carbonizing system is formed as a multistage structure, and is generally constituted by a step of heating an outer side of a cylindrical pipe by using a carrier means in an inner portion of the pipe, and evaporating and carbonizing a processing object by evaporating a water content. However, the external heat type utilizes only about 30 % or less of an input calorie even if a dry distillation gas is heated and is reused as a heat source, a heat efficiency thereof is very bad, and it is necessary to burn a lot of fossil fuel. Accordingly, since not only a lot of CO2 is discharged so as to cause a global warming, but also an entire structure of an apparatus is complicated, there are great disadvantages that a maintenance thereof is not easy, and an initial cost thereof is high. Further, since the process object is not uniform in accordance with a condition such as a seasonal variation or the like, a great dispersion exists in an inputting time to a carbonizing machine. Since the raw material having the dispersion mentioned above is continuously processed, the dispersion of the input raw material generates a dispersion of a quality of a produced carbide in the case where the process is managed on the basis of only a time, and it is impossible to produce a uniform carbide. Accordingly, in the case where the processed carbide is reused as the resources, it is utilized in earth naturalization and a dehydrating step at the most. Therefore, there is a disadvantage that it is not proper for a high-level resource circulation.

On the other hand, since the internal heat type direct combustion continuous carbonizing system corresponds to a technique for aiming a volume reduction and a weight reduction, the fuel is always used, and a flame is directly applied to the raw material (the processing object). Accordingly, since the quality of the processing object at a time of discharging for the product remains in a raw state without being carbonized, or a mixture state in which a calcified material is mixed in the carbide, it is not proper for the utilization as the resources.

Since the carbide recycled as the resources requires a uniformity as an absolute condition, the production of the carbide which can be utilized as the resources is limited to the processed material in a narrow range, in the external heat type dry distillation continuous carbonizing system and the internal heat direct combustion continuous carbonizing system in which the processing object is processed in the mixture state of the carbide and the non-carbide as mentioned above.

In recent days, there has been proposed a method of processing a combustible waste material by utilizing a rotary kiln. However, in the proposed method, since the flame is blown in an inner portion of the kiln from a downstream side of the rotary kiln, and the blowing of the flame is continued during the process, there is an objection that a fuel cost is extremely high. Further, the conventional method can hardly carbonize the processing object having a high water content, having an indefinite form and having a high viscosity such as a sewage sludge and a food sludge.

### Disclosure of the Invention

Accordingly, an object of the present invention is to provide a processing method which can process biomass resources to a carbide having a uniformity and including a large amount of high-carbon charcoal, can hold down an initial cost while can execute a large amount of process (for example, 100 ton per day), has a low running cost while can limit a fuel consumption to a significantly low level, and can continuously carbonize a object having a high water content, having an unstable shape and having a high viscosity such as a sewage sludge even being a simple structure.

In order to achieve the object mentioned above, according to the present invention, there is provided a method comprising the steps of:
(i) continuously supplying a processing object which is not preliminarily treated, or a processing object which is formed at a predetermined magnitude by a preliminary treatment such as a fragmentation, a water content reduction or the like, from an upstream side of a cylindrical rotary kiln in which a spiral carrier wall is provided in an inner peripheral surface in an entire length and an agitating wall cutting across the carrier wall is formed in the carrier wall in a middle portion from the upstream side at a predetermined unit amount while rotating the rotary kiln;
(ii) blowing a flame in an inner portion of the rotary kiln from a downstream side in a carrying direction of the rotary kiln in the state (i), and stopping the blowing of the flame if the processing object is ignited within the rotary kiln;
(iii) supplying an air necessary for burning a combustible gas generated from the processing object to an inner portion of the rotary kiln from a downstream side, and self burning (self combustion) the combustible gas without supplying any fuel;
(iv) sucking a gas generated in the inner portion of the rotary kiln from the upstream side of the rotary kiln so as to detoxify and discharge; and
(v) discharging the carbide of the processing object from an outlet in the downstream side of the rotary kiln so as to cool by executing the operations in the (i) to (iv).

According to the present invention, the structure may be made such that a solid material (for example, a house broken material, a thinned wood or the like) is crushed, the processing object such as a sludge having a high water content is formalized to an appropriate shape, and a surface of the formalized processed material is made in an approximately dry state by using an appropriate heating means, ventilation means or heating and ventilation means in such a manner that the formalized objects are not bonded or adhered to each other.

### Brief Description of the Drawings

Next, a description will be given of an embodiment of a method according to the present invention with reference to the accompanying drawings.
Fig. 1 is a side view schematically showing a carbonization processing apparatus for executing the method according to the present invention by using a partly cross section;
Fig. 2 is a partly enlarged perspective view showing a state in which an agitating wall is provided in a carrier wall in the carbonization processing apparatus in Fig. 1;
Fig. 3 is a cross sectional view of a cylinder body 1 of a rotary kiln showing a state in which a processing object existing at a position surrounding by the carrier wall and the agitating wall in Fig. 2 is carbonized; and
Fig. 4 is a cross sectional view of the cylinder body 1 showing a state in which the cylinder body 1 is rotated in a clockwise direction from the state shown in Fig. 3.

### Best Mode for Carrying Out the Invention

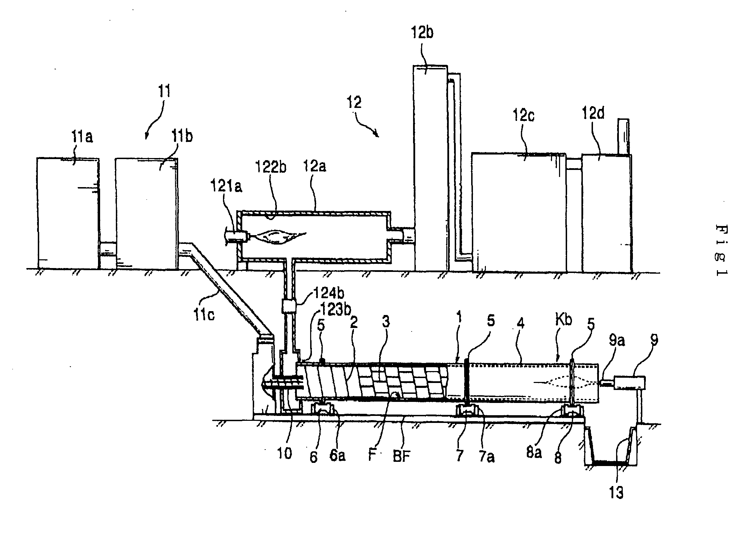

In Fig. 1, reference numeral 1 denotes a cylinder body having a length of about 10 m to 15 m and an inner diameter of about 30 to 80 cm, and made of a steel pipe. In this case, one cylinder body 1 is formed by connecting a plurality of tube bodies having a desired unit length to each other in an outer flange shaped joint.

Reference numeral 2 denotes a carrier wall provided in such a manner as to be formed in a spiral shape over an entire length of the cylinder body 1. A middle portion from an upstream of the spiral carrier wall 2 is provided with an agitating wall 3 in which a cross section in a direction cutting across the carrier wall 2 in this portion is formed in an approximately semicircular shape, an approximately triangular shape, an approximately trapezoidal shape or the like.

Reference numeral 4 denotes a heat insulating layer provided in an entire length outer surface of the cylinder body 1. A rotary kiln main body Kb is formed on the basis of the structure from the cylinder body 1 to the heat insulating layer 4. In the rotary kiln main body Kb in Fig. 1, a left side of the cylinder body 1 corresponds to an upstream side, and a right side thereof corresponds to a downstream side.

In the rotary kiln main body Kb mentioned above, a band-like ring body 5 is attached to three positions in a longitudinal direction, specifically both front and rear end portions and a center portion, and lower portions of the respective ring bodies 5 are supported by rotatable support rollers 6, 7 and 8. The position of the support roller 6 includes a transverse movement fixation letting out a thermal expansion to a downstream side. Further, the rotation of the rotary kiln main body Kb is achieved by attaching a sprocket (not shown) to an outer periphery of the band-like ring body 5, and connecting the sprocket and an output sprocket of the motor by a chain.

As mentioned above, the rotary kiln main body Kb is rotated at a fixed position on the rollers 6 to 8. In this case, reference symbols 6a, 7a and 8a denote a roller stand, and reference symbol BF denotes a base on which the roller stands 6a to 8a are fixed. In the illustrated embodiment, the rotary kiln main body Kb is provided in an approximately horizontal position, however, may be arranged in a downward slope (a right side in Fig. 1 corresponds to a downstream side).

Reference numeral 9 denotes a gas burner using a propane gas for supplying a flame arranged in a downstream side (a right side in Fig. 1) of the rotary kiln main body Kb. The gas burner 9 is provided in a state in which a flame injection port 9a of the burner 9 is directed to an upstream side of the cylinder body 1 in the rotary kiln main body Kb. In this case, a cooling device for cooling a processed carbide is arranged front side of the gas burner 9.

Reference numeral 10 denotes a supplying means for supplying a processing object into the kiln arranged in an upstream side of the rotary kiln main body Kb. The supplying means is specifically formed by a screw conveyor, a hopper with a shutter or the like, and is formed in such a manner as to be capable of continuously supplying a waste material such as biomass resources to be processed to an inner portion of the kiln from an upstream side of the rotary kiln main body Kb at a fixed amount per time.

Reference numeral 11 denotes a preliminary treatment portion arranged short of the supplying means 10. The illustrated preliminary treatment portion 11 is constituted by a forming portion 11a and a surface evaporating portion 11b as an example. The forming portion 11a and the surface evaporating portion 11b are provided for coping with a case where the processing object is constituted by a waste material having a high water content such as a sludge or the like. The preliminary treatment portion 11 crushes the processing object in the case where the processing object is constituted by the processing object having the water content less than 50 % to 55 %, or the case where it is constituted by a solid raw material (processing object, the same as follows), and supplies the processing object as it is in the case where it is constituted by a particulate raw material. The preliminary treatment portion 11 having a function difference caused by a different treatment in correspondence to the raw material is arranged selectively or side by side in the upstream side of the rotary kiln main body Kb.

In the preliminary treatment portion 11, the surface evaporating portion 11b is provided for receiving the processing object formed in the forming portion 11a so as to be formalized, and making the surface of the sludge in a dry state by a heating means, a ventilation means or a heating and ventilation means. As the evaporating means, there can be listed up, for example, a drum type drying machine, however, the other heating and ventilation machines may be employed as far as the same function can be achieved. The processing objects in which the surface is evaporated in the surface evaporating portion 11b in such a manner that they are neither bonded nor adhered are carried to the supplying means 10 by a carrier means 11c such as a belt conveyor or the like. In correspondence to an evaporating cost, there can be employed a case where a produced carbide is attached to a surface of the processing object formalized in accordance with a feedback molding or the like so as to absorb the surface water content and is supplied at a fixed amount by the kiln inside carrier means 10 such as a screw conveyor or the like in such a manner that the processing obj ects are not bonded to each other.

Reference numeral 12 denotes an exhaust gas treating means sucking a gas such as a combustion gas generated in the inner portion of the kiln during the processing step so as to detoxify, in an open end in an upstream side of the rotary kiln main body Kb. The exhaust gas treating means 12 is shown in Fig. 1 by being schematically blocked. Reference symbol 12a denotes a combustion block constituted by an after burner 121a for a burning treatment of a black smoke, a foreign odor, and a stink gas which may be generated by the processing object, and a combustion chamber 122a. The combustion block 12a is connected to the upstream of the rotary kiln main body Kb via a connection chamber 123b, and is provided with a damper 124b in the middle of the connection path. Reference symbol 12b denotes a cooling block cooling the exhaust gas getting out from the combustion block 12a, and reference symbol 12c denotes an intermediate processing block filled with a calcium hydroxide for neutralizing a Cl component or the like in the cooled exhaust gas and increasing a dust collection efficiency, and an active carbon for increasing the dust collection efficiency by a filter fabric within the next filter block. The active carbon can use a fine-grain carbide carbonized in the rotary kiln in the method according to the present invention. Reference symbol 12d denotes a filtration suction block provided with a filter means filtrating the ash and the dust in the exhaust gas and a suction means.

Since one example of the continuous carbonization processing apparatus utilizing the rotary kiln executing the method according to the present invention is structured as mentioned above, a description will be given next of the carbonizing process in which the sludge having the high water content is set to the processing object while using the apparatus mentioned above.

First, in the preliminary treatment portion 11, the dehydrated sludge to be processed is formalized and the surface of the formalized object to be processes is set to the dry state by using an appropriate heating means in such a manner that the objects are not bonded or adhered to each other. Alternatively, in the case of continuously processing throughout the year, since the surface evaporation becomes non-uniform due to a seasonal variation, a dehydration efficiency or the like, the produced carbide is fed back by the supplying means 10, is thrown at a fixed amount so as to be attached to the surface of the processing object, and is fed in the supplying means 10 by a screw conveyor, a hopper with a shutter or the like.

On the contrary, with respect to the rotary kiln main body Kb, prior to the input of the processing object by the supplying means 10, the inner portion is preheated by blowing in the flame from the burner 9 while rotating the kiln main body Kb by a driving force so as to apply a rotation in a feeding direction by the carrier wall 2. This preheat is executed for about 20 minute to 30 minute, and the processing object is continuously thrown in the upstream side of the rotary kiln Kb from the supplying means 10 while keeping the state in which the flame is blown in.

The input processing object is sequentially fed in the downward side of the kiln main body Kb on the basis of the operation of the carrier wall 2 in the inner portion in accordance with the rotation of the rotary kiln main body Kb. In this feeding, the evaporation is promoted in the portion provided with the agitating wall 3, on the basis of the operation of the wall 3. Further, since the flame is blown in the inner portion of the kiln main body Kb from the burner 9 at a time of feeding in, the water content contained in the processing object is evaporated all at once, and the water content of the processing object itself is almost lost toward the downward side of the rotary kiln main body Kb. Further, the exhaust gas processing means 12 is already driven at this stage, and sucks the internal gas of the rotary kiln main body Kb.

As a result, in the evaporated processing object thrown in the inner portion of the rotary kiln main body Kb from the upstream side thereof and carried to the downward side on the basis of the rotation of the main body Kb so as to reach the downward end portion, the combustible gas component discharged from the inner portion is ignited by the flame of the burner 9.

In the present invention, if the combustible gas component discharged from the processing object is ignited in the manner as mentioned above, the blowing of the flame from the burner 9 is stopped. Even if the blowing of the flame is stopped, the burning state of the gas component is not changed, the ignited portion is moved upward step by step toward the upstream side (the input side of the processing object) in the inner portion of the rotary kiln main body Kb, and is located, for example, at a position (a self burning position F) at an interval of about 2 m to 3 m from the upstream end portion, and the combustion of the combustible gas component discharged from the processing object is continued. The burning temperature of the self burning flame is set to about 830 °C to 850 °C.

As mentioned above, in the method according to the present invention, the combustible gas component discharged from the inner portion of the processing object heated in the inner portion of the rotary kiln main body Kb is burned, and the processing object is carbonized on the basis of the combustion. A description of a carbonizing mechanism will be given.

At the self burning position F corresponding to an approximately fixed position in the inner portion of the rotary kiln main body Kb, the processing object M appears to be burnt, however, the combustion corresponds to the combustion of the combustible gas discharged from the inner portion of the processing object M. Further, the combustion is maintained at the self burning position F corresponding to the fixed position, because the new processing object is sequentially fed to the self burning position F of the rotary kiln main body Kb from the upstream side on the basis of the rotation of the rotary kiln main body Kb, however, the fed new processing object is evaporated in the process of reaching the self burning position F and the burning condition of the combustible gas discharged from the inner portion of the processing object itself is just met at the position.

In other words, oxygen necessary for burning the combustible gas is always supplied (on the basis of the sucking effect of the exhaust gas processing means 12) from the downstream side of the rotary kiln main body Kb. However, while the sucked air flows through the center side of the cylinder body 1 of the rotary kiln Kb, the processing object is positioned in a shadow of the wall 2 in a state of being pinched back and forth by the spiral carrier walls 2 cutting across the flow of the suction air. Accordingly, the processing object itself is hardly brought into contact with the sucked oxygen, and the generated gas is self burnt at the self burning position F. Further, since the processing object fed from the upstream side by the high-temperature gas caused by the self burning moves downstream while being heated and evaporated, the combustible gas is continuously generated from the processing obj ect in accordance with a progress of a series of phenomena mentioned above and is continuously fired one after another. The burning position F is fixed at a position where a speed at which the firing is transmitted, and a speed at which the processing object is fed are balanced.

As mentioned above, in the inner portion of the rotary kiln main body Kb, since the processing object is heated and only the combustible gas discharged therefrom maintains the combustion at the self burning position F corresponding to the fixed position, and the inner portion of the rotary kiln main body Kb is always exposed to the sucking effect of the exhaust gas processing means 12 during this time, the upstream side of the self burning position F becomes almost in an oxygenless state, and the oxygen sucked in the downstream side is consumed for the combustion of the combustible gas generated at the self burning position F, so that an oxygenless state or a similar state is generated. On the other hand, the burning temperature of the self burning portion F is about 830 °C to 850 °C in an entire of the inner portion of the rotary kiln main body Kb except the downstream end portion (an ambient air inflow end) and the upstream side, on the basis of the self burning of the combustible gas maintained at the self burning position F, and a length of the combustion portion F is kept at about 1 m to 1.5 m (about 3 m in the case of the processing object having a large amount of oil content).

As a result that the inner portion of the rotary kiln main body Kb is arranged under the oxygen environment and the temperature environment as mentioned above, the processing object M carried in the inner portion is thermally decomposed without being burnt by itself, whereby the carbonization thereof is promoted. In this case, since the temperature of the carbide coming down from the downstream end of the rotating rotary kiln main body Kb to the carbide hopper 13 is about 300 °C to 350 °C, the carbide is calcified if it is left as it is. Accordingly, the carbide coming down from the shooter is forcibly cooled by dry or wet (selected in accordance with the resources circulating product), and the carbide is recovered.

In this case, since the water content is different in accordance with the season in all the processing objects on the basis of the seasonal variation, the difference of the processing step (including the sludge) or the like, the water contents in the inner portion of the processing objects are different in accordance with the seasons, even in the sludge which is formalized in the preliminary treatment portion 11 and is evaporated in the surface. However, since the condition that they are not bonded or adhered to each other is prepared, it is possible to execute the carbonizing process uniformly and with a high carbon in the same manner within the rotary kiln main body Kb mentioned above, even if the water content is changed.

The reason is as follows. Since the drying time is short in the case where the water content is small, the self burning position F where the burning condition of the generated combustible gas within the rotary kiln main body Kb is prepared is moved to the upstream side (the flame generated by the gas combustion is moved to the upstream side). Since it takes a long time to dry in the case where the water content is large, the self burning position F where the burning condition of the generated combustible gas is prepared is moved to the downstream side (the flame generated by the gas combustion is moved to the downstream side). This means that the discharged position of the combustible gas component evaporated by the heating of the processing object such as the sludge or the like so as to be discharged from the inner portion moves naturally to the upstream side or the downstream side within the rotary kiln main body Kb in correspondence to the level of the water content.

The combustion of the combustible gas generated by the heating of the processing object in the inner portion of the rotary kiln main body Kb mentioned above so as to be discharged, and the exhaust gas of the gas within the kiln main body Kb generated in accordance with the carbonizing phenomenon are sucked into the exhaust gas processing means 12, the black smoke and the odor are processed in the combustion block 12a, and the Cl component or the like is purified in the next intermediate processing block 12c after passing through the cooling block 12b, and is discharged out of the system from the filtration and suction block 12d.

Next, a description will be given of an operation of the agitating wall 31 provided in the carrier wall 2 of the cylinder body 1 in the rotary kiln main body Kb of the carbonization processing apparatus according to the present invention. In the agitating wall 31, the cross section formed so as to bulge toward a center of the cylinder body 1 from the lower edge of the carrier wall 2 is formed in an approximately circular arc shape. If the agitating wall 31 exists, the processing object M does not enter into the center side of the cylinder body 1 from the upper edge of the carrier wall 2. Accordingly, since the processing object M is agitated in such a manner that back and front of the processing object M are inverted and rolled in the place surrounded by the front and rear carrier walls 2 and 2 and the agitating wall 31, the processing object itself is preferably carbonized without being burnt. In other words, a heated air passes through an inner side (a center side) of the cylinder body 1 rather than an upper edge of the carrier wall 2, in the inner portion of the cylinder body 1. At this time, if the processing object M enters into the center side (the inner side) of the cylinder body 1 through which the hot wind passes, the processing object M is burnt by the direct contact of the flame with the processing object M, and a great deal of the processing object M is calcified.

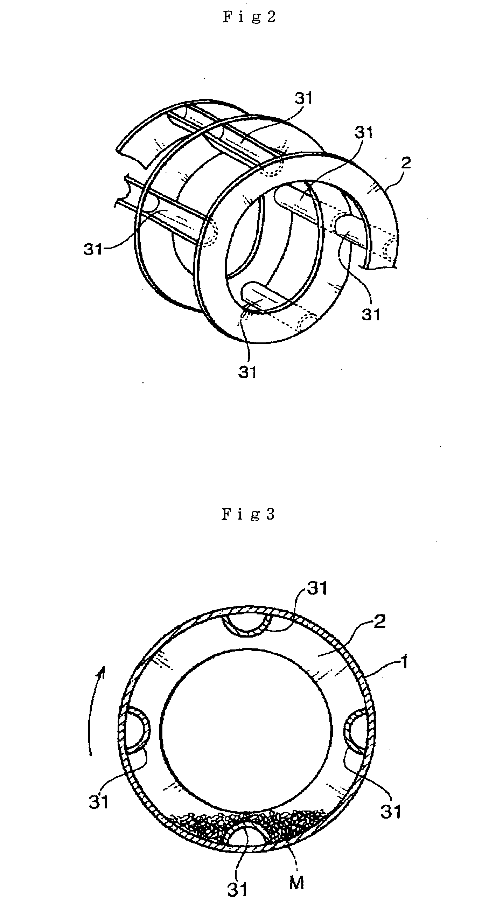

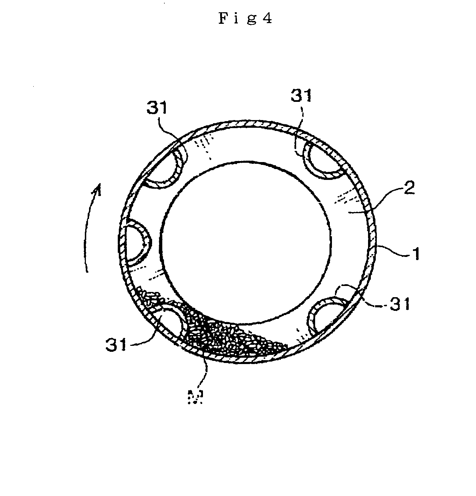

Accordingly, according to the present invention, if the processing object M exists between the front and rear carrier walls 2 and 2, and the processing object M cannot move to the upper half side of the cylinder body 1 while being taken by the rotation of the cylinder body 1 by the agitating wall 31 in such a manner as to prevent the processing object M from entering into the center side (the inner side) of the cylinder body 1 from the upper edge of the carrier wall 2 (refer to Figs. 3 and 4), the processing object M is not burnt, and the oxygen between the front and rear carrier walls 2 and 2 is consumed for the combustion of the combustible gas discharged from the processing object M. Accordingly, the state inwhich the oxygen is extremely little is formed between the carrier walls 2 and 2. Therefore, since the processing object M is heated to the high temperature by the heated hot wind passing through the inner side (the center side) from the upper edge of the carrier wall 2 under this state, the combustible gas is further generated from the processing object M, a so-called braised state is generated and the carbonization is promoted, so that it is possible to obtain the carbide having a high purity.

A shape of the agitating wall 31 mentioned above is formed in an approximately semicircular shape in its cross section, however, it may be formed in an approximately triangular shape in its cross section, an approximately trapezoidal shape in its cross section, an approximately chevron shape in its cross section or the like as far as the processing object M can be agitated in the same manner as mentioned above. Further, an outer surface of the agitating wall including the agitating wall formed in the approximately semicircular arc shape in the cross section may be formed in a concavo-convex surface such as a wavy shape or the like. In this case, in order to obtain a uniform carbide, it is desirable that the shape of the processing object M of the biomass resources such as the sludge or the like is in order.

In the present invention, even if the processing object is constituted by the other chicken feces or livestock feces having a high water content and an indefinite form than the sludge, it is possible to execute the same carbonizing process as the embodiment mentioned above, and even if it is constituted by the solid or definite combustible processing object such as a food grain such as a chaff, a bean curd refuse, a coffee bean or the like, green vegetables or fish and shellfish, it is possible to execute the carbonizing process on the basis of the same operation as the embodiment mentioned above. In this case, since the material containing a large amount of oil content such as the bean curd refuse or the like has a high calorie even if the water content thereof is high, it is possible to apply the carbonizing process as it is. Further, since a garbage such as a municipal refuse or the like has a high water content, it may be once crushed into small sizes so as to be in the sludge state, and may be thereafter carbonized as the sludge.

### Industrial Applicability

The present invention is structured as mentioned above. In other words, according to the present invention, the method is provided with the steps of (i) continuously supplying the processing object from the upstream side of the cylindrical rotary kiln in which the spiral carrier wall is provided in the inner peripheral surface in the entire length and the agitating wall cutting across the carrier wall is formed in the carrier wall in the middle portion at the predetermined unit amount while rotating the rotary kiln, the processing object being constituted by the waste material which fails to be carbonized as a result of the other carbonizing process trial such as the sludge having the high water content, having the indefinite shape and having the high viscosity, or the other biomass waste material, (ii) blowing the flame in the inner portion of the rotary kiln from the downstream side in the carrying direction of the rotary kiln in the state (i), and stopping the blowing of the flame if the processing object is ignited within the rotary kiln, (iii) supplying the air necessary for burning the combustible gas generated from the processing object to the inner portion of the rotary kiln from the downstream side, and self burning without supplying any fuel, (iv) sucking the gas generated in the inner portion of the rotary kiln from the upstream side of the rotary kiln so as to detoxify and discharge, and (v) discharging the carbide of the processing object from an outlet in the downstream side of the rotary kiln so as to cool by executing the operations in the (i) to (iv), whereby the carbide of the processing object is continuously taken out from the downstream side of the rotary kiln. Accordingly, it is possible to carbonate the biomass waste material such as the sludge or the like with a simple structure, inexpensively, efficiently and continuously in an energy saving manner. Therefore, the present invention is extremely useful as the processing method of the biomass resources which is particularly poor for the final treatment, and is useful for constructing the resource circulation.

Further, in accordance with the carbonization processing method of the present invention, in comparison with the conventional method of forming the sludge or the like to the dewatering cake having the water content of about 70 to 80 % so as to burn in the incinerator, since the C component forming CO2 is discharged as the carbon, it is possible to reduce CO2 discharged to the ambient air by 50%. This can reduce a used amount of the air for the combustion. Accordingly, it is possible to make the combustion block for the combustion compact, it is possible to make the cooling block, the neutralization block and the filtration and suction block compact in the same manner, it is possible to obtain an effect of widely reducing the initial cost and the auxiliary fuel in the burning is not necessary due to the self burning. Therefore, it is possible to extremely reduce the running cost.

## Claims

1. A carbonization processing method comprising the steps of:
(i) continuously supplying a processing object at a predetermined unit amount which is not preliminarily treated, or a processing object M which is formed at a predetermined magnitude by a preliminary treatment such as a fragmentation, a water content reduction or the like, from an upstream side of a cylindrical rotary kiln in which a spiral carrier wall is provided in an inner peripheral surface in an entire length and an agitating wall cutting across said carrier wall is formed in the carrier wall in a middle portion from the upstream side while rotating said rotary kiln;
(ii) blowing a flame in an inner portion of the rotary kiln from a downstream side in a carrying direction of the rotary kiln in said state (i), and stopping the blowing of the flame if said processing object M is ignited within said rotary kiln;
(iii) supplying an air necessary for burning a combustible gas generated from said processing object M to an inner portion of the rotary kiln from a downstream side, and self burning (self combustion) said combustible gas without supplying any fuel;
(iv) sucking a gas generated in the inner portion of said rotary kiln from the upstream side of said rotary kiln so as to detoxify and discharge; and
(v) discharging the carbide of said processing object M from an outlet in the downstream side of the rotary kiln so as to cool by executing the operations in said (i) to (iv).

2. A carbonization processing method as claimed in claim 1, wherein the processing object having a high water content is formalized to an appropriate shape after lowering the water content, and is exposed to a preliminary treatment for forming a surface state in which the objects are neither bonded nor adhered to each other by using a heating means, a ventilation means or both of heating and ventilation means.

3. A carbonization processing method as claimed in claim 1 or 2, wherein the agitating wall is formed in an approximately semicircular arc shape or an approximately chevron shape in its cross section, and is formed in such a manner as to bulge toward an inner side from a lower edge of the carrier wall.

4. A carbonization processing method as claimed in any one of claims 1 to 3, wherein the processing object existing in the position surrounded by the carrier wall and the agitating wall within the rotary kiln is evaporated and carbonized by the heat generated by the combustion of the combustible gas generated by the heating of said object.

5. A carbonization processing method as claimed in any one of claims 1 to 4, wherein the preliminary treatment formalizes thehydratedprocessingobject, adsorbs the surface water content to the carbide by attaching the produced carbide to the surface, and forms the surface state in which the processing objects are neither bonded nor adhered to each other.
